# EUROPÄISCHE PATENTANMELDUNG

(11) **EP 2 239 368 A1**
(43) Veröffentlichungstag der Anmeldung: **13.10.2010**
(21) Anmeldenummer: 09005208.5
(22) Anmeldetag: 09.04.2009
(51) Int. Cl.: D06N 3/00, D21H 27/00, B32B 27/12, D21H 21/48, G06K 19/02, G06K 19/077

(54) **Flächiges Substrat auf organischer Basis, Verwendung eines solchen Substrats sowie Verfahren**

(71) Anmelder: Cham Paper Group Schweiz AG, 6330 Cham (CH)
(72) Erfinder: Valera, Natacha, CH-6330 Cham (CH); Habich, Edgar, CH-5634 Merenschwand (CH)
(74) Vertreter: Quermann, Helmut

(57) **Zusammenfassung**

Die Erfindung schlägt ein flächiges Substrat auf organischer Basis vor, wobei das Substrat auf mindestens einer Seite gestrichen ist und die Oberfläche der gestrichenen Seite eine Oberflächenrauhigkeit < 100 nm aufweist.

Verwendet wird das Substrat insbesondere zur Herstellung von elektronischen Bauelementen und/oder integrierten Schaltkreisen.

Gemäß dem erfindungsgemäßen Verfahren zur Herstellung eines mit mindestens einem elektronischen Bauelement und/oder mindestens einem integrierten Schaltkreis versehenen Substrats auf organischer Basis, das auf mindestens einer Seite gestrichen ist, ist vorgesehen:
- Erzeugen des Substrats mit einer Oberflächenrauhigkeit der gestrichenen Seite von < 100 nm,
- Aufbringen des elektronischen Bauelements bzw. integrierten Schaltkreises auf die gestrichene Oberfläche des Substrats mittels Drucken.

## Beschreibung

Aus der DE 196 01 358 C2 ist ein Substrat auf organischer Basis bekannt. Bei dem Substrat handelt es sich um ein Papier. In dieses ist eine integrierte Schaltung, die vorbestimmte Daten enthält, eingebettet. Die integrierte Schaltung weist eine Dicke auf, die verglichen mit der Dicke des Papiers gering ist und derart in die Papiermasse eingebettet ist, dass das Papier drucktechnisch behandelbar ist, mit einer Passivierungsschicht, die die integrierte Schaltung zumindest teilweise umgibt.

Ein flächiges Substrat auf organischer Basis ist ferner aus der EP 1 073 993 B1 bekannt. Auch bei diesem Substrat handelt es sich um ein Papier, das mit einer integrierten Schaltung versehen ist. Die genannte Gestaltung findet insbesondere bei Sicherheitsdokumenten und Banknoten Verwendung, zum Schutz gegen Nachahmungen und Fälschungen. Die integrierte Schaltung umfasst ein halbleitendes organisches Polymer. Polymerchips sind flexibel und daher besonders für die Verwendung in Sicherheitsdokumenten wie Banknoten geeignet, bei denen nicht ausgeschlossen werden kann, dass sie gefaltet werden. Scharfe Falten in einem Chip aus einem halbleitenden organischen Polymer beeinflussen die Funktion des Chips nicht. Bei Banknotenpapier liegt die Dicke des Papiersubstrats in der Regel im Bereich von bis zu 100 µm (100 Mikrometer).

Stand der Technik in der Papierindustrie sind Oberflächenrauhigkeiten von flächigen Substraten von > 1µm. Diese Oberflächenrauhigkeiten werden erreicht durch Veredelungsverfahren wie z. B. Streichen oder Kalandrieren oder durch eine Kombination dieser Verfahren.

Aufgabe der vorliegenden Erfindung ist es, ein flächiges Substrat zu schaffen, das es ermöglicht, ein oder mehrere elektronische Bauelemente, wie z. B. Transistoren, Chips, und/oder ein oder mehrere integrierte Schaltkreise auf das Substrat zu drucken. Dieses Drucken ist bisher nur bei auf anorganischer Basis hergestellten Folien möglich. Wesentlich ist für die vorliegende Erfindung ferner die biologische Abbaubarkeit des Substrats. Auf anorganischer Basis hergestellte Folien erfüllen diese Forderung nicht. Das Substrat soll eine hohe Beständigkeit aufweisen.

Die Erfindung schlägt ein flächiges Substrat auf organischer Basis vor, wobei das Substrat auf mindestens einer Seite gestrichen ist und die Oberfläche der gestrichenen Seite eine Oberflächenrauhigkeit < 100 nm (< 100 Nanometer) aufweist.

Dadurch, dass das Substrat auf mindestens einer Seite gestrichen ist, wird die hohe Beständigkeit des Substrats errecht. Die sehr geringe Oberflächenrauhigkeit der Oberfläche der gestrichenen Seite des Substrats und die damit homogene Struktur dieser Oberfläche ermöglicht es, mittels Druckverfahren kleine Strukturen organischer Elektronik aufzubringen.

Die Strichrezeptur weist vorzugsweise als Inhaltsstoffe die in der Papierindustrie bekannten Pigmente, Bindemittel, Cobinder und Additive auf. Additive in diesem Sinne sind insbesondere u.a. Viskositätsregler, Nassfestmittel, pH-Regler, Farb- und Nuancierfarbstoff, optischer Aufheller, Entschäumer, Gleitmittel und Vernetzungsmittel.

Das Pigment ist insbesondere ausgewählt aus der Gruppe Clay, Kaolin, Talkum, Calciumcarbonat, Satinweiss, Titandioxid, synthetische Polymerpigmente, Aluminiumsilika, Zinkoxide, Bariumsulfate, Gips, Silika, Aluminiumtrihydrate, Aluminiumoxide, Glimmerpigmente, Kieselgur, Kieselsäure, Böhmit (Aluminiumhydroxid), leitfähige Pigmente.

Das Bindemittel ist insbesondere ausgewählt aus der Gruppe Styrol-Butadien-Latexbinder, Stryrol-Acrylat-Latexbinder, Styrolbutadienacrylnitril-Latexbinder, Styrolmaleinsäureanhydrid-Binder, Styrolacrylatmaleinsäureanhydrid-Binder, Polysacharide, Proteine, Polyvinylpyrrolidone, Polyvinylalkohol, Polyvinylacetate, Cellulose und Cellulosederivate, Polyurethane, Polyester, Acrylsäure, Polymer auf Basis von Ethylenacrylsäure-Wachsen, Polyethylen.

Das Vernetzungsmittel ist insbesondere ausgewählt aus der Gruppe Glyoxal-Harz, Epoxidharz, Ammonium oder Kalium Zirkoniumcarbonat, Formaldehyd-Spender wie Melaminformaldehyd, Harnstoff-Melaminformaldehyd, und teilweise oder voll methylierte Derivate, Isocyanate.

Das gemäß vorgenannter Rezeptur hergestellte Substrat weist gegenüber folgenden Chemikalien und Verwandten Beständigkeiten auf: Wasser, Entwickler auf Amin-Basis, Säure, Isolator in organischen Lösungsmitteln, Aceton, Jod als Ätzmittel, Halbleiter in organischen Lösemittel Photolack. Nach Kontaktierung des Substrats mit den genannten Chemikalien ist keine Veränderung der Oberflächenstruktur des Substrats nachweisbar, womit die Oberflächenbeschichtung nicht angegriffen worden ist. Dies ist besonders positiv unter dem Aspekt der Herstellung und Funktionalität von mit anorganischen und organischen, elektrisch leitfähigen Substanzen (Lacken und Tinten mittels Druckverfahren, einschließlich gegebenenfalls Ätzverfahren) hergestellten elektronischen Bauelementen und integrierten Schaltkreisen. Die qualitative und quantitative Bewertung des Endprodukts (somit die Ausbeute, Leserate der gedruckten elektrischen Bauelemente und Schaltkreise) weist dabei keine Unterschiede zu denen auf anorganischer Basis gedruckten auf.

Vorteilhaft ist weiterhin, dass das beschriebene Substrat solche Materialfestigkeiten, insbesondere Dehnverhalten aufweist, die es erlauben, in einem kontinuierlichen Druckprozess mehrlagige strukturierte Schichten passergenau übereinander zu legen.

Vorzugsweise weist das Substrat beidseitig eine Oberflächenrauhigkeit von jeweils < 100 nm auf. Insbesondere beträgt die Oberflächenrauhigkeit auf mindestens einer Seite des Substrats < 50 nm, insbesondere 10 bis 40 nm.

Vorzugsweise handelt es sich bei dem Substrat um ein Papier oder ein Biopolymer oder ein Papier mit rückseitiger und/oder vorderseitiger Schicht aus Biopolymer oder ein Biopolymer, das mit rückseitigem und/oder vorderseitigem Papierstrich veredelt ist.

Insbesondere weist das Substrat folgenden Schichtaufbau auf:
a.) Papierstrich - Papier, oder
b.) Papierstrich - Papier - Papierstrich, oder
c.) Papierstrich - Biopolymer, oder
d.) Papierstrich - Biopolymer - Papierstrich, oder
e.) Biopolymer - Papier, oder
f.) Biopolymer - Papier - Biopolymer, oder
g.) Papierstrich - Biopolymer - Papier, oder
h.) Papierstrich - Biopolymer - Papier - Biopolymer - Papierstrich

Das Substrat, wobei es sich hierbei insbesondere um Papier handelt, ist mindestens einseitig gestrichen. Ferner wird das Substrat, das mindestens einseitig gestrichen ist, anschließend kalandriert. Vorzugsweise wird auf das Substrat ein Bladestrich als Vorstrich und mittels Curtain Coating ein Deckstrich aufgebracht. Zwischen dem Vorstrich und dem Deckstrich kann ein Zwischenstrich aufgebracht werden.

Die Erfindung schlägt somit ein Substrat mit minimaler Oberflächenrauhigkeit vor, wobei diese reduzierte Oberflächenrauhigkeit insbesondere durch die Abstimmung von Substrat- und Strichrezeptur, durch Beschichtungsverfahren und Glättverfahren aufeinander erzielt wird. Letztere können sowohl in Inline- als auch in Offline-Prozessen durchgeführt werden.

Unter der Bezeichnung Substrat wird somit nicht nur das flächige Ausgangselement auf organischer Basis, somit ein Papier oder Biopolymer verstanden, sondern das behandelte Ausgangsprodukt, das ein oder mehrfach auf zumindest einer Seite gestrichen ist, um die gewünschte geringe Oberflächenrauhigkeit von < 100 nm zu erreichen.

Die Oberfläche des Substrats weist somit eine sehr geringe Oberflächenrauhigkeit auf, die < 100 nm ist. Ermittelt wird die Oberflächenrauhigkeit durch Messung des Oberflächenprofils des Substrats mit einem 12 µm Nadelkopf bei 3 mg Druck. Der Steigungswinkel des Oberflächenprofils des Substrats, insbesondere dann, wenn die Oberflächenrauhigkeit 10 bis 40 nm beträgt, ist insbesondere < 10° auf 5 µm.

Diese sehr glatte Oberfläche des Substrats weist eine homogene Struktur auf, welche es mittels Druckverfahren ermöglicht, kleine Strukturen organischer Elektronik in einer Stärke < 50 nm, insbesondere < 20 nm herzustellen. Die Substratoberfläche ist insbesondere für die Herstellung von organischer Polymerelektronik geeignet, da durch das Fehlen der sonst papiertypischen starken Oberflächenunterschiede (Peaks) die Funktionalität entsprechend drucktechnischer Bauteile gewährleistet ist.

Bei dem Substrat handelt es sich vorzugsweise um ein gestrichenes Substrat, insbesondere um ein gestrichenes Papier. Das Substrat ist mindestens einseitig gestrichen. Vorzugsweise ist auf jeder Substratseite mindestens ein Strich vorgesehen. Insbesondere werden auf jede Seite zwei oder drei Striche aufgebracht. Anschließend erfolgt die Kalandrierung, mindestens einseitig.

Zum Auftragen des jeweiligen Striches sind generell alle Streich- und Beschichtungsverfahren geeignet, wie Size Press, Leimpresse, Sprühverfahren, Rakelauftrag, Bladeauftrag, Barcoating, Reverse Roll Type Coating, Air-Knife-Coating, Curtain Coating einschließlich Kombinationen dieser Verfahren.

Insbesondere erfolgt eine Bedruckung des Substrats im Tiefdruck, Flexodruck, Offsetdruck, Siebdruck oder mittels Inkjet-Verfahren. Insbesondere sind Herstellungsverfahren geeignet, innerhalb denen diese Verfahren miteinander kombiniert werden. Geeignet sind sowohl kontinuierliche als auch diskontinuierliche Druckprozesse.

Die Erfindung schlägt ferner die Verwendung des erfindungsgemäßen Substrats zur Herstellung von elektronischen Bauelementen und/oder integrierten Schaltkreisen vor, insbesondere solchen, die durch Drucken hergestellt werden.

Die Erfindung schlägt des Weiteren ein Verfahren zur Herstellung eines mit mindestens einem elektronischen Bauelement und/oder mindestens einem integrierten Schaltkreis versehenen Substrats auf organischer Basis, das auf mindestens einer Seite gestrichen ist, vor, wobei zunächst das Substrat mit einer Oberflächenrauhigkeit der gestrichenen Seite < 100 nm erzeugt wird und dann das elektronische Bauelement bzw. der integrierte Schaltkreis auf die gestrichene Oberfläche des Substrats mittels Drucken aufgebracht wird.

Die Erfindung ermöglicht somit Anforderungen des beschriebenen Druckprozesses mit einem flächigen Substrat auf organischer Basis zu erfüllen, welche bislang nur mit Kunststofffolien (vorzugsweise PET) erreicht wurden. Ein weiterer, wesentlicher Aspekt der Erfindung ist die biologische Abbaubarkeit des Substrats im Vergleich zu auf anorganischer Basis hergestellten Folien.

Das Substrat ist geeignet für die Bedruckung mit anorganischen und organischen, elektrisch leitfähigen Druckfarben, Lacken und Tinten zur Herstellung von elektronischen Bauelementen und integrierten Schaltkreisen. Durch die Reduzierung der Oberflächenrauhigkeit (Rz < 100 nm) durch Abstimmung von Substrat- und Strichrezeptur, Beschichtungsverfahren und Glättverfahren aufeinander. Letztere können sowohl im Inline- oder in Offline-Prozessen durchgeführt werden. Weiterhin wird die Eignung des Substrats durch Beständigkeiten gegenüber Chemikalien erzielt, wie sie im erwähnten Fertigungsprozess in Kontakt mit dem Substrat kommen. Die qualitative und quantitative Bewertung des Endprodukts weist dabei keine Unterschiede zu denen auf anorganischer Basis gedruckten auf.

Nachfolgend ist für ein Ausführungsbeispiel das flächige Substrat auf organischer Basis bezüglich dessen Herstellung spezifiziert:
- ausgegangen wird von einem geleimten Rohpapier,
- auf das Rohpapier werden drei Striche aufgetragen, nämlich:
   1. Vorstrich: pigmentierter Strich - mit Blade Verfahren aufgetragen,
   2. Zwischenstrich: pigmentierter Strich - mit Curtain Coating Verfahren aufgetragen,
   3. Deckstrich: Polymer Beschichtung - mit Rollrakel oder Curtain Coating Verfahren aufgetragen.

Nach dem Streichen wir das Papier kalandriert.

## Patentansprüche

1. Flächiges Substrat auf organischer Basis, wobei das Substrat auf mindestens einer Seite gestrichen ist und die Oberfläche der gestrichenen Seite eine Oberflächenrauhigkeit < 100 nm aufweist.

2. Substrat nach Anspruch 1, wobei Inhaltsstoffe der Strichrezeptur Pigmente, Bindemittel, Cobinder und Additive sind.

3. Substrat nach Anspruch 2, wobei Additive Viskositätsregler, Nassfestmittel, pH-Regler, Farb- und Nuancierfarbstoff, optischer Aufheller, Entschäumer, Gleitmittel und Vernetzungsmittel sind.

4. Substrat nach Anspruch 2 oder 3, wobei
- das Pigment ausgewählt ist aus der Gruppe Clay, Kaolin, Talkum, Calciumcarbonat, Satinweiss, Titandioxid, synthetische Polymerpigmente, Aluminiumsilika, Zinkoxide, Bariumsulfate, Gips, Silika, Aluminiumtrihydrate, Aluminiumoxide, Glimmerpigmente, Kieselgur, Kieselsäure, Böhmit (Aluminiumhydroxid), leitfähige Pigmente, und/oder
- das Bindemittel ausgewählt ist aus der Gruppe Styrol-Butadien-Latexbinder, Stryrol-Acrylat-Latexbinder, Styrolbutadienacrylnitril-Latexbinder, Styrolmaleinsäureanhydrid-Binder, Styrolacrylatmaleinsäureanhydrid-Binder, Polysacharide, Proteine, Polyvinylpyrrolidone, Polyvinylalkohol, Polyvinylacetate, Cellulose und Cellulosederivate, Polyurethane, Polyester, Acrylsäure, Polymer auf Basis von Ethylenacrylsäure-Wachsen, Polyethylen und/oder
- das Vernetzungsmittel ist insbesondere ausgewählt aus der Gruppe Glyoxal-Harz, Epoxidharz, Ammonium oder Kalium Zirkoniumcarbonat, Formaldehyd-Spender wie Melaminformaldehyd, Harnstoff-Melaminformaldehyd, und teilweise oder voll methylierte Derivate, Isocyanate.

5. Substrat nach einem der Ansprüche 1 bis 4, wobei das Substrat folgenden Schichtaufbau aufweist:
a.) Papierstrich - Papier, oder
b.) Papierstrich - Papier - Papierstrich, oder
c.) Papierstrich - Biopolymer, oder
d.) Papierstrich - Biopolymer - Papierstrich, oder
e.) Biopolymer - Papier, oder
f.) Biopolymer - Papier - Biopolymer, oder
g.) Papierstrich - Biopolymer - Papier, oder
h.) Papierstrich - Biopolymer - Papier - Biopolymer - Papierstrich

6. Substrat nach einem der Ansprüche 1 bis 5, wobei das Substrat beidseitig eine Oberflächenrauhigkeit von jeweils < 100 nm aufweist.

7. Substrat nach einem der Ansprüche 1 bis 6, wobei die Oberflächenrauhigkeit auf mindestens einer Seite des Substrats < 50 nm, insbesondere 10 bis 40 nm beträgt.

8. Substrat nach einem der Ansprüche 1 bis 7, wobei der Steigungswinkel des Oberflächenprofils des Substrats < 10° auf 5 µm ist, insbesondere bei einer Oberflächenrauhigkeit des Substrats von 10 bis 40 nm.

9. Substrat nach einem der Ansprüche 1 bis 8, wobei das Papier ein- oder beidseitig gestrichen ist.

10. Substrat nach einem der Ansprüche 1 bis 9, wobei das Substrat mindestens einseitig gestrichen und die gestrichene Seite kalandriert ist.

11. Substrat nach einem der Ansprüche 1 bis 10, wobei auf das Substrat ein Bladestrich als Vorstrich und mittels Curtain Coating ein Deckstrich aufgebracht ist.

12. Verwendung eines Substrats gemäß einem der Ansprüche 1 bis 11 zur Herstellung von mindestens einem elektronischen Bauelement, insbesondere einem Transistor oder einem Chip und/oder mindestens einem integrierten Schaltkreis.

13. Verfahren zur Herstellung eines mit mindestens einem elektronischen Bauelement, insbesondere einem Transistor oder einem Chip, und/oder mindestens einem integrierten Schaltkreis versehenen Substrats auf organischer Basis, das auf mindestens einer Seite gestrichen ist, mit folgenden Merkmalen:
- Erzeugen des Substrats mit einer Oberflächenrauhigkeit der gestrichenen Seite von < 100 nm, vorzugsweise < 50 nm, insbesondere 10 bis 40 nm,
- Aufbringen des elektronischen Bauelements bzw. des integrierten Schaltkreises auf die gestrichene Oberfläche des Substrats mittels Bedrucken.

14. Verfahren nach Anspruch 13, wobei das Beschichten und Glätten des Substrats zum Erzeugen der Oberflächenrauhigkeit < 100 nm im Inline- oder Offline-Prozess erfolgt.

15. Verfahren nach Anspruch 13 oder 14, wobei das elektronische Bauelement bzw. der integrierte Schaltkreis mittels anorganischen oder organischen, elektrisch leitfähigen Substanzen, Lacken oder Tinten hergestellt wird.

16. Verfahren nach einem der Ansprüche 13 bis 15, wobei das Substrat im Tiefdruck, Flexodruck, Offsetdruck, Siebdruck oder Inkjet-Druck bedruckt wird.

17. Verfahren nach einem der Ansprüche 13 bis 16, wobei das Substrat kontinuierlich oder diskontinuierlich bedruckt wird.
